## Europäisches Patentamt
## European Patent Office
## Office européen des brevets

(19)

(11) Numéro de publication: **0 358 568**
**A1**

(12)

# DEMANDE DE BREVET EUROPEEN

(21) Numéro de dépôt: **89402420.7**

(22) Date de dépôt: **06.09.89**

(51) Int. Cl.⁵: **B 60 P 3/36**

(30) Priorité: **09.09.88 FR 8811800**

(43) Date de publication de la demande:
**14.03.90 Bulletin 90/11**

(84) Etats contractants désignés:
**AT BE CH DE ES FR GB GR IT LI LU NL SE**

(71) Demandeur: **ESTEREL INTERNATIONAL, Société Anonyme**
**Route de Gournay**
**F-76160 Darnetal (FR)**

(72) Inventeur: **Dufrancatel, Michel**
**14, Rue Auguste Borgnet**
**F-76130 Mont Saint Aignan (FR)**

(74) Mandataire: **Derambure, Christian et al**
**BUGNION ASSOCIES 55, rue Boissonade**
**F-75014 Paris (FR)**

(54) Agencement de meuble dans une construction et véhicule, tel que caravane, comprenant un meuble mobile.

(57) Agencement de meuble (1) dans une construction (2) comprenant au moins une cloison (3) essentiellement verticale avec une ouverture de passage (4) du meuble (1), ce meuble (1) étant dans l'une des deux positions extrêmes respectivement d'un côté et de l'autre de la cloison (3) et pouvant être déplacé de l'une à l'autre de ses deux positions par une force d'entraînement appliquée provoquant son déplacement et des moyens (5) mécaniques de support et de guidage, caractérisé en ce que les positions extrêmes du meuble sont d'une part situées au voisinage de la cloison (3) et, d'autre part, décalées l'une par rapport à l'autre le long de celles-ci.

FIG.1

EP 0 358 568 A1

Bundesdruckerei Berlin

**Description**

## AGENCEMENT DE MEUBLE DANS UNE CONSTRUCTION ET VEHICULE, TEL QUE CARAVANE, COMPRENANT UN MEUBLE MOBILE

L'invention concerne d'abord un agencement de meuble dans une construction et ensuite, l'application particulière à un véhicule tel que caravane.

On connaît déjà diverses variantes de réalisation d'agencement de meuble dans une construction comprenant au moins une cloison essentiellement verticale avec une ouverture de passage du meuble, ce meuble étant dans l'une des deux positions extrêmes respectivement d'un côté et de l'autre de la cloison et pouvant être déplacé de l'une à l'autre de ses deux positions par une force d'entraînement appliquée provoquant son déplacement et des moyens mécaniques de support et de guidage. Par exemple, le meuble tel qu'une tablette horizontale est monté amovible ou encore coulissant horizontalement perpendiculairement à la cloison. Dans le cas où les niveaux du plancher de part et d'autre de la cloison sont différents -l'un plus haut, l'autre plus bas- il s'ensuit que le meuble ne se trouve pas dans les deux positions possibles à une hauteur convenable d'utilisation. Si dans une position la hauteur est convenable, elle est alors nettement trop haute ou trop basse dans l'autre.

Une telle circonstance se rencontre dans le cas d'un véhicule tel qu'une caravane dont le plancher est surélevé, par rapport au sol à l'extérieur de la caravane. Et alors même que dans un tel cas on pourrait souhaiter pouvoir utiliser un bloc-cuisine depuis l'intérieur ou l'extérieur de la caravane, le bloc-cuisine étant placé respectivement à l'intérieur ou à l'extérieur, cela s'est révélé jusqu'à présent généralement impossible étant donné que la hauteur du plancher de la caravane par rapport au sol est importante -de l'ordre de 50cm environ-.

On connaît, par ailleurs des agencements de meubles pouvant être déplacés entre deux positions extrêmes, y compris dans des caravanes, notamment des caravanes rigides pliantes. Par exemple, le document US 4 396 222 décrit une caravane rigide pliante avec un aménagement intérieur de meuble dont un est déplaçable entre une position haute d'utilisation et une position basse d'escamotage et non utilisation. Le document DE 1 893 408 décrit une caravane rigide non pliante comportant un réservoir monté sur une trappe pivotante entre deux positions dont une de rangement et une d'utilisation. Le document US 4 150 861 décrit un meuble de camping ayant un soubassement fixe et un meuble mobile porté par des bielles qui lui sont articulées ainsi qu'au soubassement.

On peut se référer, en ce qui concerne l'état de la technique aux documents EP 0 008 987, US 4 150 861, FR 2 513 098, US 3 406 999 et DE 81 04005.

L'invention vise à résoudre le problème technique principal de la possibilité d'utiliser un meuble (conformément à l'acceptation définie dans le texte) dans l'une de deux positions extrêmes dans lesquelles il peut être placé, de part et d'autre d'une cloison en étant placé du côté de la cloison où se trouve le meuble, avec, pour chacune des deux positions, des références, différentes (telles que plan d'appui, sol, etc...).

On entend ici par meuble un objet fonctionnel déplaçable tel qu'un élément mobilier fonctionnel d'aménagement d'habitacle (table, tablette, plan de travail, plaque de cuisson, évier, etc...) ou tout autre objet fonctionnel ou utilitaire voire décoratif (outil, etc...).

L'invention vise à résoudre également le problème technique subsidiaire découlant du problème technique principal de la possibilité d'obturer substantiellement l'ouverture de la cloison permettant le passage du meuble quelle que soit la position de celui-ci.

A cet effet et selon un certain aspect, l'invention concerne un aménagement de meuble dans une construction comprenant au moins une cloison essentiellement verticale avec une ouverture de passage du meuble, ce meuble étant dans l'une des deux positions extrêmes respectivement d'un côté et de l'autre de la cloison et pouvant être déplacé de l'une à l'autre de ses deux positions par une force d'entraînement appliquée provoquant son déplacement et des moyens mécaniques de support et de guidage, caractérisé en ce que les positions extrêmes du meuble sont d'une part situées au voisinage de la cloison et, d'autre part, décalées l'une par rapport à l'autre le long de celles-ci.

Selon une application particulière, la cloison fait partie d'un véhicule ou habitacle tel qu'une caravane pourvu également d'un plancher formant zone d'appui intérieure haute supporté par des roues ou supports reposant au sol formant zone d'appui extérieure basse, l'écartement H entre les deux positions extrêmes du meuble dans la direction verticale étant sensiblement égal à ou voisin de la hauteur H du plancher par rapport au sol , ce qui a pour effet que le meuble se trouve à la même hauteur relative pour un utilisateur dans ses deux positions extrêmes.

Selon au autre aspect, l'invention concerne un véhicule, notamment servant d'habitacle, tel que caravane, camping-car, maison mobile, camion ou remorque magasin ou équivalent, fixe ou mobile, comprenant un plancher surélevé par rapport au sol et soutenu par des supports tels que roues, béquilles ou équivalents, ainsi que des cloisons définissant l'habitacle, pourvu d'un aménagement mobilier fonctionnel comprenant généralement une pluralité de meubles dont au moins, ou partie d'un, se trouvant dans l'une des deux positions extrêmes, dont une position intérieure haute d'utilisation proche d'une cloison essentiellement verticale, et pouvant être déplacé de l'une à l'autre de ces deux positions extrêmes en restant constamment au moins sensiblement en position relative horizontale, au moyen d'une force d'entraînement appliquée provoquant son déplacement et des moyens mécaniques de support et de guidage, caractérisé en ce que

que les deux positions extrêmes du meuble sont la position intérieure haute d'utilisation et une position extérieure basse également d'utilisation laquelle dernière position est proche de la cloison et de l'autre côté de celle-ci que la position intérieure haute, les deux positions étant décalées l'une par rapport à l'autre dans la direction verticale avec un écartement H sensiblement égal à ou voisin de la hauteur H du plancher par rapport au sol ; la cloison comportant une ouverture de passage du meuble de l'une à l'autre de ses positions extrêmes ; ce qui a pour effet que le meuble peut être utilisé depuis l'intérieur ou l'extérieur du véhicule, selon qu'il est en position intérieure haute ou en position extérieure basse, respectivement, tout en étant, pour l'utilisateur à une hauteur relative d'utilisation sensiblement égale dans les deux cas. Ce meuble est préférentiellement un bloc-cuisine. L'ouverture de la cloison est susceptible d'être obturée par au moins une trappe mobile, notamment deux trappes respectivement haute et basse, indépendantes l'une de l'autre coplanaires en position de fermeture. Les trappes haute et basse ont des hauteurs respectives telles que en position de fermeture leurs bords libres contigus sont situés à proximité au dessus du plan supérieur du meuble, en position basse, notamment au moins sensiblement coplanaire de la paroi horizontale supérieure du soubassement, de manière que le meuble étant en position extérieure basse la trappe haute puisse être amenée en position de fermeture sans interférer avec le meuble ou les bielles tout en fermant substantiellement l'ouverture de la cloison.

L'invention est applicable aux constructions fixes ou mobiles (caravanes, camping-car, etc...) ou celles susceptibles d'être déplacées (maisons mobiles), rigides ou non, pliantes ou non.

Une application préférentielle, objet de la description détaillée est celle d'une caravane et d'un meuble consistant en un bloc-cuisine ou équivalent.

Les autres caractéristiques et avantages de l'invention résulteront de la description qui suivra, en référence au dessins annexés dans lesquels :

    - La figure 1 est une vue schématique, en plan vertical, partielle, transversale, d'une caravane agencée conformément à l'invention, avec le meuble en position intérieure haute et l'ouverture de la cloison totalement fermée.

    - La figure 2 est une vue du même type que celle de la figure 1 avec le meuble en position extérieure basse et l'ouverture de la cloison totalement ouverte.

    - La figure 3 est une vue du même type que celles des figures 1 et 2 avec le meuble en position extérieure basse et l'ouverture de la cloison substantiellement fermée.

    - La figure 4 est une vue du même type que celles des figures 1 à 3 illustrant les mouvements des éléments mobiles de l'agencement, le meuble étant en position intermédiaire et l'ouverture de la cloison totalement ouverte.

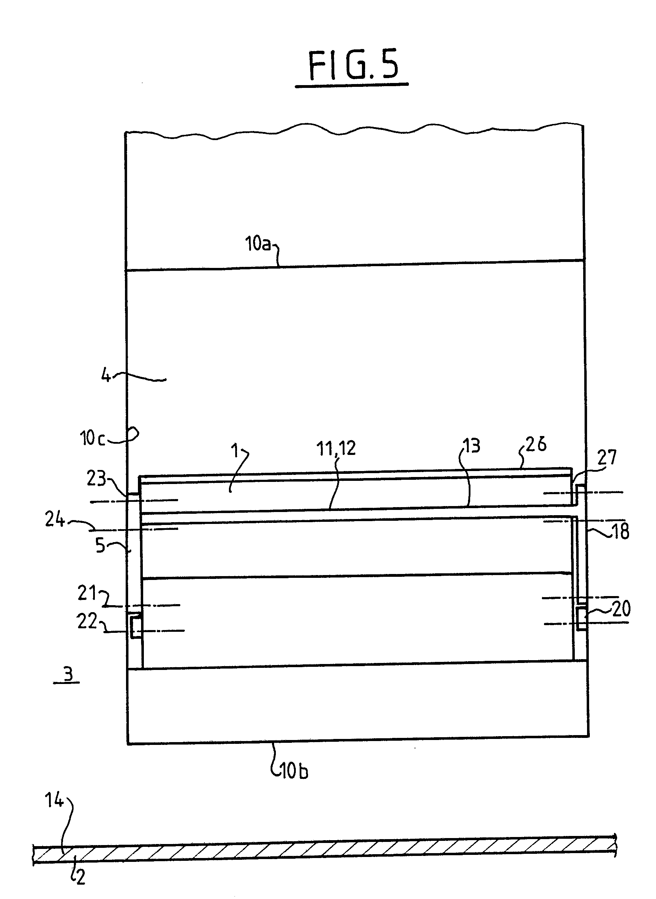

    - La figure 5 est uen vue schématique, en plan vertical, partielle, longitudinale, selon la ligne V-V de la figure 1.

L'invention concerne généralement un agencement de meuble 1, (dans l'acceptation générale précédemment définie), dans une construction 2, fixe ou mobile, rigide ou non, comprenant au moins une cloison 3 essentiellement verticale avec une ouverture 4 ménagée dedans pour le passage du meuble 1.

Le meuble 1 peut se trouver dans l'une des deux positiosn extrêmes respectivement d'un côté et de l'autre de la cloison 3. L'une de ces positions est dite intérieure et l'autre extérieure. Le meuble 1 peut être déplacé de l'une à l'autre de ces deux positions extrêmes par une force d'entraînement appliquée au meuble 1 et des moyens 5 mécaniques de support et de guidage.

Le meuble 1 peut avoir la fonction, la forme, la structure qui découlent de l'acceptation générale donnée précédemment. Dans la forme d'application particulière, non limitative, il a une forme générale monobloc limitée par un contour parallélépipédique plat à grande face au moins sensiblement horizontale. Toutefois, d'autres formes peuvent être envisagées.

Les qualificatifs de "vertical", "horizontal" se réfèrent à l'agencement, au meuble, à la construction notamment au véhicule, dans sa position la plus usuelle d'utilisation. Toutefois, ces mêmes éléments peuvent, essentiellement se trouver dans une position absolue différente, notamment légèrement différente, sans que cela affecte substantiellement l'invention.

Dans une application particulière, ainsi qu'on le verra ultérieurement la construction est un véhicule servant d'habitacle tel qu'une caravane ou équivalent.

La cloison 3 s'entend d'une paroi essentiellement rigide et continu dans son ensemble, notamment mince et globalement plane, telle que les cloisons ou parois couramment utilisées dans les constructions fixes ou mobiles. En particulier la cloison 3 est un panneau constitutif d'une caravane ou équivalent. On pourrait concevoir que dans sa généralité, il n'y ait pas de cloison 3, l'absence de cloison 3 ayant pour effet de ménager le passage nécessaire au meuble 1. Cependant, il serait nécessaire, alors que la construction 2 soit matérialisée par un quelconque autre élément ou structure solide, notamment auquel peuvent être associés rigidement les moyens 5. De plus l'existence d'une telle cloison 3 permet d'une part de matérialiser ou de repérer les deux positions extrêmes du meuble 1, notamment intérieure et extérieure et, d'autre part, de séparer l'espace en un espace intérieur 6 et un espace extérieur 7 respectivement dans lesquels peut se trouver le meuble 1 dans ses deux positions extrêmes et un utilisateur du dit meuble 1, espaces 6, 7 comportant des références (tel que plan d'appui) différentes.

La cloison 3 est essentiellement verticale c'est-à-dire qu'elle est de direction générale verticale, ce qui n'exclut pas qu'elle puisse avoir une légère inclinaison d'ensemble ou des inclinaisons plus prononcées localement si cette cloison a une forme tourmentée.

La cloison 3 comporte deux faces opposées respectivement interne 8 et externe 9, du côté des espaces intérieurs 6 et extérieurs 7 respectivement.

L'ouverture 4 est limitée par des bords 10 de la cloison. Cette ouverture 4 est suffisamment grande (c'est-à-dire les bords en regard suffisamment éloignés) pour permettre le passage du meuble 1 (et des moyens 5) d el'une à l'autre de des deux positions extrêmes.

Selon l'invention, les deux positions intérieure et extérieure respectivement du meuble 1 sont toutes deux des positions d'utilisation fonctionnelle du meuble 1 par un utilisateur se trouvant normalement dans l'espace intérieur 6 ou extérieur 7 dans lequel se trouve alors le meuble 1. Ces deux positions sont stables et peuvent être durables, le temps souhaité par l'utilisateur. Entre ces deux positions extrêmes, le meuble 1 peut se trouver, lors de son mouvement de déplacement, dans une infimité de positions successives de passage.

La force d'entraînement pour le déplacement du meuble 1 de l'une à l'autre de ses positions extrêmes est notamment une force manuelle appliquée directement ou indirectement au meuble 1, notamment appliquée aux moyens 5.

Les moyens 5 sont associés à la cloison 3, directement ou indirectement, ou plus généralement à la structure de la construction 2 et associés au meuble 1. Ces moyens 5 comportent, en général des bielles, tringles, tiges, pivots, charnières, glissières, coulisses, etc...

Selon l'invention, les positions extrêmes du meuble sont d'une part situées au voisinage de la cloison 3 et, d'autre part, décalées l'une par rapport à l'autre le long de celles-ci. En particulier, les positions extrêmes sont respectivement contre ou sensiblement contre respectivement la cloison 3, sur la face interne 8 et la face externe 9.

On entend par positions décalées l'une par rapport à l'autre le long de la cloison, le fait que les deux positions ne sont pas en regard (ou symétriques) l'une de l'autre par rapport à la cloison 3. Par rapport à une telle position intermédiaire en regard (ou symétrique) d'une position de départ, la position finale résulte d'un glissement le long de la cloison 3.

Ainsi, dans le cas d'application particulier d'une caravane ou équivalent, une position extrême, notamment intérieure, est haute et l'autre, notamment extérieure, est basse, les qualificatifs "haut" et "bas" devant être considérés de façon relative, ce qui signifie, en l'occurrence que les deux positions sont à des niveaux différents.

Préférentiellement, les moyens 5 mécaniques de support et de guidage comprennent au moins une bielle 19, 20 de liaison articulée d'une part à la cloison 3, directement ou non, et, d'autre part, au meuble 1. On reviendra en détail sur une forme possible de réalisation de ces moyens 5.

Préférentiellement, les moyens 5 sont également aptes à assurer une position relative constante du meuble 1 par rapport à une direction de référence. Cette direction de référence est orthogonale à la direction d'articulation de la bielle 19, 20 des moyens 5 à la cloison 3 et au meuble 1. Dans le cas d'application particulier d'une caravane ou équivalent représenté sur les dessins, cette direction de référence est verticale ou sensiblement verticale et le meuble 1 est horizontal ou sensiblment horizontal dans ses deux positions extrêmes et dans ses positions intermédiaires, ce qui a pour effet d'éviter le renversement du meuble 1. Dans ce cas, les axes d'articulation des bielles des moyens 5 sont au moins sensiblement horizontaux.

Dans d'autres cas d'application, la direction de référence peut être horizontale, les axes des bielles des moyens 5 étant verticaux.

Les moyens mécaniques aptes à assurer une position relative constante du meuble 1 par rapport à une direction de référence font partie des moyens 5 mécaniques de support et de guidage comprenant, à cet effet, au moins deux bielles 19, 20 de liaison articulées d'une part à la cloison 3, d'autre part au meuble 1 en constituant un parallélogramme déformable 21, 22, 23, 24. Préférentiellement il est prévu deux paires de bielles 19, 20 écartées transversalement l'une de l'autre le long de leurs axes d'articulation commun 21, 22, 23, 24.

L'agencement comprend, en outre, ces moyens 11 manuels de préhension permettant d'appliquer la force d'entraînement pour le déplacement du meuble 1. Ces moyens 11 comprennent par exemple uen poignée 12 associée à une bielle de liaison des moyens 5. Par exemple, la poignée 12 fait partie d'un cadre 13 en U reliant les deux paires de bielles 19, 20 des moyens 5. De plus, les moyens 11 manuels de préhension sont préférentiellement agencés pour former levier de manière que le déplacement du meuble 1 soit facilité.

Si l'on se réfère au cas (tel que celui d'une caravane) où la direction de référence est verticale, les axes des bielles des moyens 5 horizontaux, les positions extrêmes haute et basse, respectivement, la cloison 3 sépare, préférentiellement, deux zones d'appui au moins sensiblement horizontales et à des niveaux différents, l'une 14 haute et l'autre 15 basse, les positions extrêmes du meuble 1 étant respectivement haute et basse du côté des zones d'appui haute 14 et basse 15, les écartements verticaux H entre les deux zones d'appui 14, 15 et les deux positions extrêmes du meuble 1 étant sensiblement égaux ou voisins.

Ainsi que cela résulte de ce qui précède, une application possible, mais non limitative de l'agencement du meuble 1 qui vient d'être décrit est celle d'un véhicule tel qu'une caravane (cas représenté sur les figures).

Dans ce cas, la cloison 3 fait partie d'un véhicule ou habitacle 2 tel qu'une caravane pourvu également d'un plancher formant zone d'appui intérieure haute 14 supporté par des roues ou supports 16 reposant au sol formant zone d'appui extérieure basse 15, l'écartement H entre les deux positions extrêmes du meuble 1 dans la direction verticale étant sensiblement égal à ou voisin de la hauteur H du plancher 14 par rapport au sol 15, ce qui a pour effet que le meuble 1 se trouve à la même hauteur relative pour un utilisateur dans ses deux positions extrêmes.

L'invention concerne, ensuite, et comme application particulière, un véhicule , notamment servant d'habitacle, tel que caravane, camping-car, maison mobile, camion ou remorque magasin ou équivalent, fixe ou mobile, comprenant un plancher 14 surélevé par rapport au sol 15 et soutenu par des supports 16 tels que roues, béquilles ou équivalents, ainsi que des cloisons définissant l'habitacle, pourvu d'un aménagement mobilier fonctionnel comprenant généralement une pluralité de meubles dont au moins 1, ou partie d'un, se trouvant dans l'une des deux positions extrêmes, dont une position intérieure haute d'utilisation proche d'une cloison 3 essentiellement verticale, et pouvant être déplacé de l'une à l'autre de ces deux positions extrêmes en restant constamment au moins sensiblement en position relative horizontale, au moyen d'une force d'entraînement appliquée provoquant son déplacement et des moyens 5 mécaniques de support et de guidage.

Dans un tel véhicule, les deux positions extrêmes du meuble 1 sont la position intérieure haute d'utilisation et une position extérieure basse également d'utilisation laquelle dernière position est proche de la cloison 3 et de l'autre côté de celle-ci que la position intérieure haute, les deux positions étant décalées l'une par rapport à l'autre dans la direction verticale avec un écartement H sensiblement égal à caractérisé en ce que les deux positions ou voisin de la hauteur H du plancher 14 par rapport au sol 15 ; la cloison 3 comportant une ouverture 4 de passage du meuble 1 de l'une à l'autre de ses positions extrêmes ; ce qui a pour effet que le meuble 1 peut être utilisé depuis l'intérieur ou l'extérieur du véhicule 2, selon qu'il est en position intérieure haute ou en position extérieure basse, respectivement, tout en étant, pour l'utilisateur à une hauteur relative d'utilisation sensiblement égale dans les deux cas.

Par exemple, le meuble 1 est un bloc cuisine ou partie de bloc-cuisine.

Dans ce cas, le meuble 1 peut se trouver par rapport au plan d'appui respectivement 14, 15 au dessus duquel il se trouve à une hauteur de l'ordre d'environ 90cm. Et le plancher 14 étant à une hauteur du sol de l'ordre de 50cm, les deux positions haute et basse sont écartées verticalement également de l'ordre de 50cm.

Ainsi que cela découle de ce qui a été déjà mentionné, les moyens 5 mécaniques de support et de guidage comprennent au moins une bielle 19, 20 de liaison articulée d'une part à un soubassement 17 fixé à la cloison 3 et, d'autre part, au meuble 1, autour d'axes au moins sensiblement horizontaux. Préférentiellement, les moyens 5 mécaniques de support et de guidage comprennent au moins deux bielles 19, 20 de liaison constituant un parallélogramme déformable 21, 22, 23, 24 ; et comprennent au moins une paire de bielles de liaison écartées transversalement l'une de l'autre le long de leurs axes d'articulation commun. De plus, aux moyens 5 mécaniques de support et de guidage sont associés des moyens 11 manuels de préhension permettant d'appliquer la force d'entraînement pour le déplacement du meuble 1 constitués par une poignée 12 formant l'âme d'une cadre 13 en U dont les deux branches 18 sont fixées rigidement à deux bielles des moyens 5.

On se réfère maintenant aux figures sur lesquelles sont représentés les moyens 5 et 11. Ces moyens 5 et 11 comprennent deux bielles avant 19 écartées transversalement l'une de l'autre et deux bielles arrière 20 écartées transversalement l'une de l'autre, articulées au soubassement 17 autour d'axes inférieurs avant 21 et arrière 22 respectivement et au meuble 1 autour d'axes supérieurs avant 23 et arriée 24, les axes 22, 21, 23, 24 constituant un parallélogramme déformable ; l'axe inférieur avant 21 étant placé à un niveau plus élevé que l'axe inférieur arrière 22 ; l'axe inférieur arrière 22 étant situé à proximité immédiate de la cloison 3 ; les bielles 19, 20 étant inclinées à environ 45° dans les positions extrêmes du meuble 1 ; le cadre en U 13 étant fixé par ses branches 18 aux bielles arrière 20, sensiblement perpendiculairement à celles-ci et sensiblement au milieu 25 de celles-ci ; la poignée 12 formant âme du cadre 13 en U étant, en position intérieure haute du meuble 1 située au voisinage de la cloison 3, derrière et à proximité du meuble 1, au moins sensiblement au même niveau que l'axe supérieur arrière 24 et, en position extérieure basse du meuble 1 située au voisinage de la cloison 3, en-dessous et à proximité du meuble 1.

Le meuble 1 formant bloc-cuisine de forme générale parallélépipédique et relativement plate comporte un plan supérieur 26 et rigidement fixées et dirigées vers le bas deux joues 27 latérales verticales transversales auxquelles sont associées les bielles 19, 20 des moyens 5 mécaniques de support et de guidage, le bloc-cuisine 1 reposant sur le soubassement 17, en position intérieure haute, par ses joues 27.

Par exemple, le bloc-cuisine 1 comporte , incorporé dans le plan supérieur 26 de l'équipement de cuisine tel qu'un évier, une ou des plaques de cuisson. Les manettes, boutons de commandes de la ou des plaques de cuisson sont situés sur le plan supérieur 26 ce qui a pour effet d'être accessibles dans l'une comme dans l'autre des deux positions extrêmes du meuble 1. Les canalisations fluidiques de l'équipement de cuisine tels que celles pour l'eau, le gaz, l'électricité sont soit établies en permanence et comportent des éléments déformables, soit agencées de façon amovible.

Le plan supérieur 26 vient sensiblement contre la cloison 3 les positions intérieure haute et extérieure basse, respectivement sur ses faces interne 8 et externe 9.

Le soubassement 17 se présente sous la forme générale d'un caisson de forme générale parallélépipédique placé contre la cloison 3 et sur le plancher 14, limité par deux parois latérales 28 verticales, transversales, coplanaires aux joues 27 et auxquelles sont associées les bielles 19, 20 des moyens 5 mécaniques de support et de guidage. Le soubassement est limité, par ailleurs par uen paroi frontale 29 verticale et longitudinale et une paroi supérieure horizontale 30. Le soubassement 17 peut comporter également de l'équipement de cuisine tel que notamment réfrigérateur, four, armoire, etc... La paroi horizontale supérieure 30 est destinée à servir d'appui au meuble 1 en position intérieure haute. Dans cette position intérieure haute, le meuble 1 et le soubassement sont empilés sous forme d'une colonne, les joues 27 et les parois 28 étant coplanaires ou sensiblement coplanaires, de même que les chants frontaux verticaux 31 du plan 26 et des joues latérales 27. Les chants inférieurs 32 des joues latérales 27 viennent, dans cette position intérieure haute en appui contre la paroi horizontale supérieure 30. La paroi frontale 29 et les chants frontaux 31 sont parallèles et écartés de la cloison 3.

Les chants arrière verticaux 33 parallèles à, opposés à, écartés vers l'arrière par rapport aux chants frontaux verticaux 31 par rapport à un utilisateur placé en position normale d'utilisation devant le meuble 1, sont, en position intérieure haute du meuble 1 écartés de la cloison 3 en ménageant entre eux d'eux un espace vide 34 dans lequel est placée la poignée 12.

Selon l'invention, le déplacement du bloc-cuisine 1 de l'une à l'autre de ses positions haute et basse est opéré par un utilisateur manipulant la poignée 12 et se trouvant dans l'espace extérieur 7, en étant par exemple debout sur le sol 15. Par conséquent, il n'est pas indispensable d'avoir accès à la poignée 12 et à l'espace vide 34 par dessus, depuis l'espace intérieur 6 lorsque le bloc-cuisine 1 est en position haute. Et le plan supérieur 26 peut être en saillie vers l'arrière par rapport aux chants arrière verticaux 33 jusqu'à venir autre ou à proximité immédiate de la cloison 3.

L'axe 21 est située par exemple environ a égale distance de la paroi frontale 29 et de la cloison 3 et à proximité de la paroi horizontale supérieur 30. L'axe 23 est situé par exemple à proximité de l'angle formé par le plan supérieur 26 et les chants frontaux verticaux 31. L'axe 24 est situé par exemple sensiblement au centre des joues latérales 27 sensiblement à égale distance des chants 31, 33 d'une part et du plan 26 et des chants 32.

L'ouverture 4 est limitée par deux bords horizontaux supérieurs 10a et inférieur 10b et deux bords verticaux 10c. Le bord horizontal supérieur 10a est préférentiellement placé suffisamment haut -c'est-à-dire suffisamment écarté du plan supérieur 26 du bloc-cuisine 1 en position haute- pour les raisons expliquées par la suite. Le bord horizontal inférieur 10b est placé, par exemple, en dessous de l'axe 21 à 24 le plus inférieur à savoir l'axe inférieur arrière 22, notamment légèrement en dessous de la prolongation, vers le bas (c'est-à-dire le sol 15) et l'extérieur (c'est-à-dire l'espace externe 7) de la bielle arrière 20, à partir de l'axe 22, lorsque la bielle 20 se trouve dans la situation où le meuble 1 est en position intérieur haute. Les bords 10c sont proches, en regard horizontalement des joues 27 et parois 28 ainsi que les bielles 19, 20 qui leur sont proches, de manière à ce que le meuble 1 et les moyens 5 puissent traverser l'ouverture 4 avec la jeu nécessaire.

En position extérieure basse, le meuble 1 repose en appui contre la cloison 3 par ses chants frontaux 31. Ainsi, pour un utilisateur placé successivement dans l'espace intérieur 6 et l'espace extérieur 7 avec le meuble 1 situé dans l'espace où il se trouve, l'avant du meuble 1 devient arrière et inversement l'arrière devient avant. C'est pourquoi le meuble 1 est agencé convenablement pour permettre cette transformation (notamment pour la position supérieure des manettes de commande).

En position extérieure basse, les bielles arrière 20 sont en appui sur les bielles avant 19. Plus précisément, la bielle arrière 20 est placée au dessus et sur la bielle avant 19, les branches 18 du cadre en U 13 étant dirigées de haut en bas, de l'extérieur vers l'intérieur. Dans cette position, les bielles 19, 20 sont inclinées de l'intérieur vers l'extérieur et de haut vers le bas à environ 20° à 30° sur l'horizontale, le bord horizontal inférieur 10b étant placé en dessous de la partie des bielles 19, 20 traversant l'ouverture 4 pour éviter toute collision indésirable.

Dans cette position basse, la poignée 12 est située à proximité de la cloison 3, du côté de sa face externe 9 et à proximité des chants 32, dans une zone ou elle est, par conséquent non gênante et pratiquement invisible, tout en pouvant être saisie, pour le passage du meuble 1 de sa position basse à sa position haute, entre les deux joues 27 où se trouve un espace libre.

Le cas échéant (non représenté), en position extérieure basse, la poignée 12 formant âme du cadre 13 en U est portée par un support fixé à la cloison 3. De plus, ce support peut comporter un dispositif de verrouillage anti-retour ou de fermeture de sécurité.

Ainsi, en position basse, le bloc-cuisine 1 est en appui par ses joues 27 et ses chants frontaux 31 sur la cloison 3, la rigidité, la tenue, la stabilité de l'ensemble étant assuré, par cet appui ainsi que, le cas échéant, l'appui de la bielle arrière 20 sur la bielle avant et l'appui respectivement le verrouillage de la poignée 12 sur le support prévu à cet effet. Dès lors, il n'est pas indispensable de prévoir un piètement spécifique de repos du bloc-cuisine 1 sur le sol 15.

Selon une variante possible, l'ouverture 4 est permanente.

Selon une autre variante possible et préférentielle, l'ouverture 4 est temporaire, susceptible d'être obturée par au moins une trappe mobile entre deux positions extrêmes respectivement d'ouverture et de fermeture où l'ouverture 4 est dégagée et fermée, un dispositif de maintien ou de verrouillage assurant le maintien de la trappe dans la position extrême souhaitée. Des moyens de préhension tels que poignée ou équivalent sont prévus pour manipuler la trappe. Des moyens de support et de guidage de la trappe sont également prévus tels que coulisse, charnière ou autre selon que la trappe est déplacée à coulissement (notamment vertical) ou pivotement (notamment autour d'un axe horizontal).

Préférentiellement, il est prévu deux trappes respectivement haute 35 et basse 36, indépendantes l'une de l'autre coplanaires en position de fermeture. Ces deux trappes ont, par exemple, des formes générales sensiblement planes et rectangulaires, limitées, pour la trappe haute 35 par des bords horizontal supérieur 37, horizontal inférieur 38 et latéral 39 et, pour la trappe basse 36 par des bords horizontal inférieur 40, horizontal 41 et latéraux 42.

La trappe haute 35 est montée articulée par son bord horizontal supérieur 37 à la cloison 3 notamment au bord 10a de l'ouverture 4 ; est mobile dans l'espace extérieur 7 entre une position de fermeture où elle est verticale et dirigée vers le bas et une position d'ouverture où elle laisse libre l'ouverture 4 qu'elle est destinée à obturer. En position d'ouverture, la trappe haute 35 est placée sensiblement horizontalement dns l'espace extérieur 4, faisant fonction d'auvent et est maintenue au moyen de béquilles ou équivalent 43. Préférentiellement, la trappe haute 35, en position d'ouverture est légèrement inclinée de bas en haut, de son bord 40 attenant à la cloison 3 à son bord opposé libre 41. La béquille 43 peut être du type articulée à la trappe 35 sur l'un au moins de ses bords 39 et à la cloison sur son bord 10c correspondant. La hauteur moyenne de la trappe haute 35 en position d'ouverture permet à l'utilisateur en appui sur le sol 15 d'être placé dessous pour utiliser le bloc-cuisine 1. De plus, la position assez élevée du bord 10a et du bord 37 donne une ouverture 4 assez haute au dessus du bloc-cuisine 1 et du soubassement 17 ce qui peut donner à cette ouverture 4 ce qui peut donner à cette ouverture 4 une fonction de passe-plat ou de fenêtre à auvent.

La trappe basse 36 est montée articulée par son bord horizontal inférieur 40 à la cloison 3 notamment au bord 10b de l'ouverture 4, est mobile dans l'espace extérieure 7 entre une position de fermeture où elle est verticale et dirigée vers le haut et une position d'ouverture où elle est verticale et dirigée vers le bas. Plus précisément, en position d'ouverture la trappe basse 36 est placée contre la face externe 9 de la cloison 3, interposée entre celle-ci et le meuble 1.

Ainsi que cela résulte des figures, le bord inférieur 10b de l'ouverture 4 est placé à un niveau inférieur et voisin du plan supérieur 26 du meuble 1 en position extérieure basse. De plus, les trappes haute 35 et basse 36 ont des hauteurs respectives telles que en position de fermeture leurs bords libres contigus 38, 41 sont situés à proximité au dessus du plan supérieur 26 du meuble 1, en position basse, notamment au moins sensiblement coplanaire de la paroi horizontale supérieure 30 du soubassement 17, de manière que le meuble 1 étant en position extérieure basse la trappe haute 35 puisse être amenée en position de fermeture sans interférer avec le meuble 1 ou les bielles 19, 20 tout en fermant substantiellement l'ouverture 4 de la cioison 3. A cet effet, la trappe haute 35 est une grande trappe et la trappe barre 36 une petite trappe, cette dernière ayant par exemple une hauteur de l'ordre de la hauteur du meuble 1.

La trappe 35, 36 sont par exemple comparable, à la cloison 3 dans laquelle elles sont découpées.

L'invention peut faire l'objet de variantes, perfectionnements, etc... Par exemple, il peut être prévu des organes d'assistance unis ou bidirectionnels tels que vérins, vis sans fin, autonomes ou actionnés manuellement ou au moyen de moteur, aptes à faciliter le déplacement des éléments mobiles.

Le fonctionnement du véhicule qui vient d'être est le suivant.

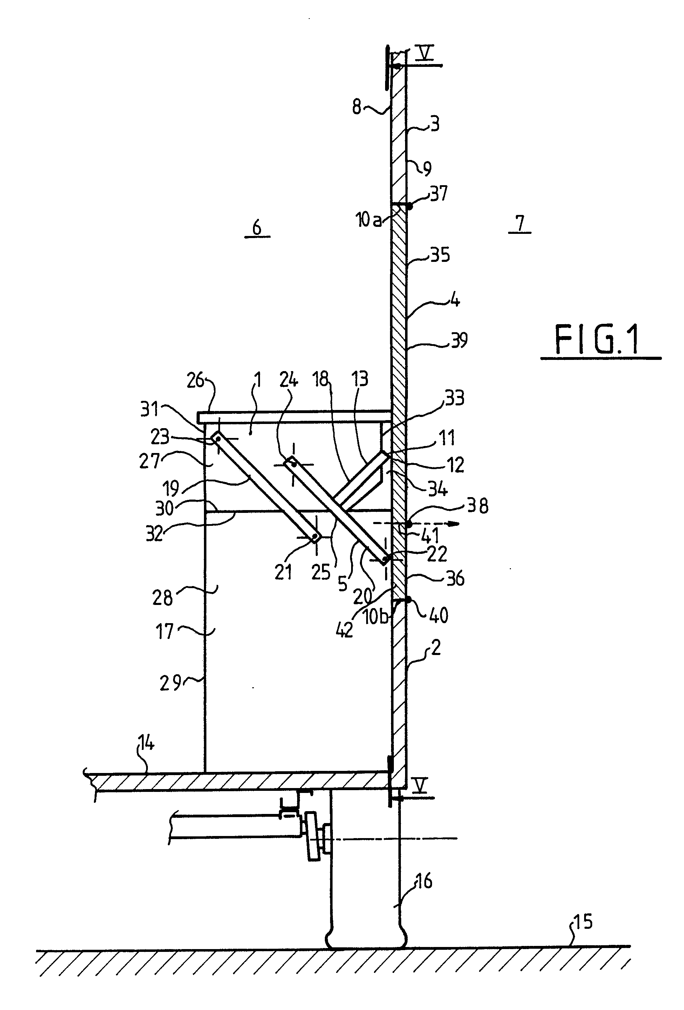

Initialement (figure 1) le bloc-cuisine 1 est en position intérieure haute où il repose sur le soubassement 17. L'ouverture 4 est fermée, les trappes 35 et 36 étant en position de fermeture, notamment verrouillées. Un utilisateur peut utiliser normalement le bloc-cuisine 1 depuis l'espace intérieur 6, en reposant sur le plancher 14, le bloc-cuisine 1 étant à une hauteur d'utilisation convenable.

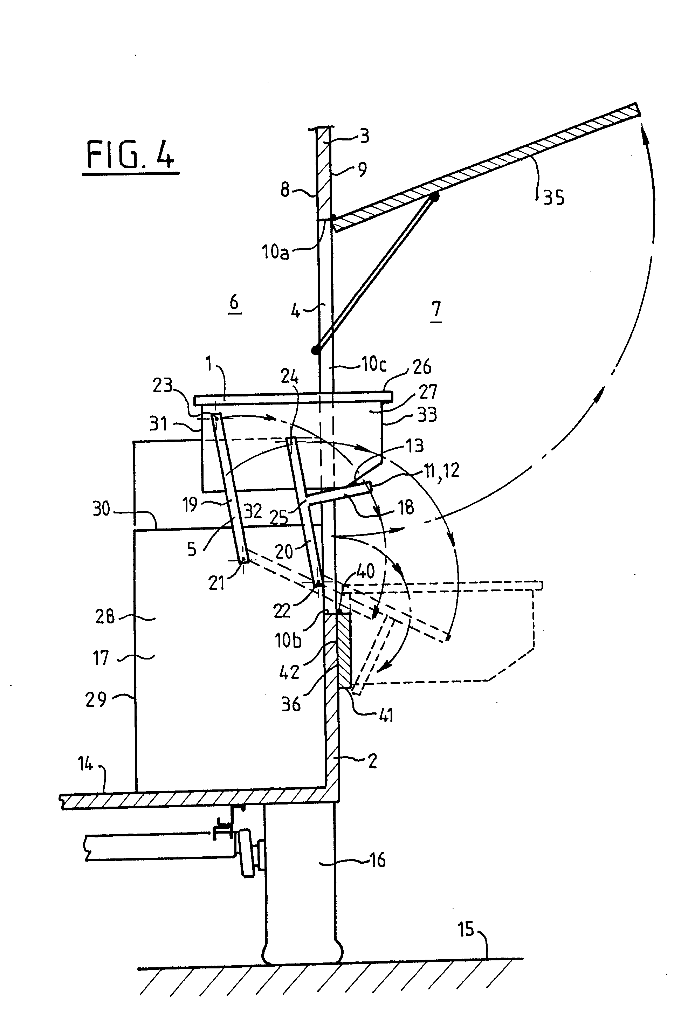

Puis (figure 4), les trappes 35, 36 sont annexées en position d'ouverture, par pivotement autour de leurs bords respectifs 37, 40, par action manuelle ou motorisée, ou assistée. Il s'ensuit que l'ouverture 4 est alors libre. Dans cette situation, un utilisateur peut accéder, depuis l'espace extérieur 7 à la poignée 12 et la manipuler pour faire passer le bloc-cuisine de sa position haute à sa position basse.

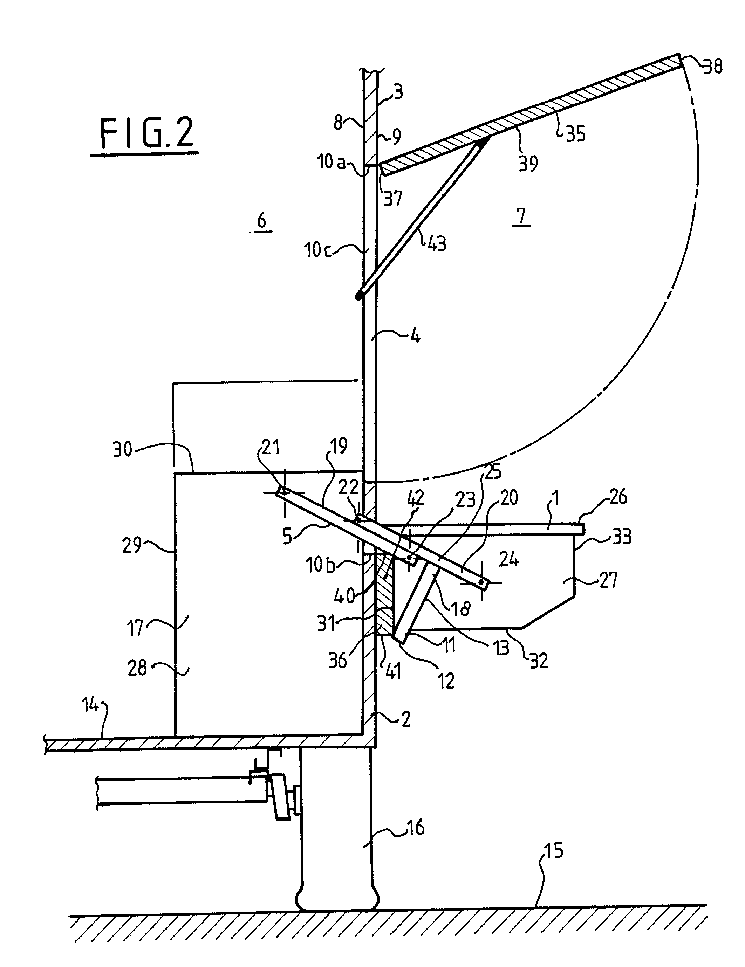

En position basse (figure 2), le bloc-cuisine 1 repose comme il a été déjà indiqué, notamment sur la trappe basse 36. Et il se trouve pour un utilisateur reposant sur le sol 15 dans une position d'utilisation convenable.

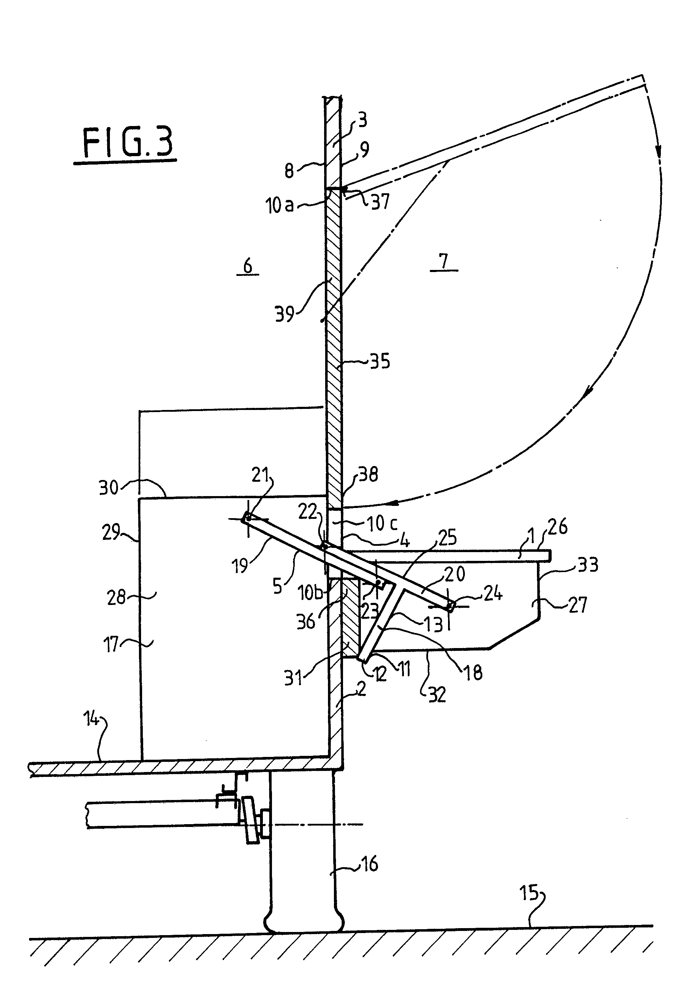

Il est alors possible d'obturer substantiellement l'ouverture 4 (figure 3) en amenant la trappe haute 35 en position de fermeture, la trappe basse 36 restant en position d'ouverture. L'ouverture 4 est alors pratiquement totalement marquée soit par la trappe 35 en position de fermeture, soit par le meuble 1, soit par le soubassement 17. Cette situation est par exemple utilisée pour la nuit. Dans cette situation, le bloc-cuisine 1 peut encore être utilisé.

## Revendications

1. Agencement de meuble (1) dans une construction (2) comprenant au moins une cloison (3) essentiellement verticale avec une ouverture de passage (4) du meuble (1), ce meuble (1) étant dans l'une des deux positions extrêmes respectivement d'un côté et de l'autre de la cloison (3) et pouvant être déplacé de l'une à l'autre de ses deux positions par une force d'entraînement appliquée provoquant son déplacement et des moyens (5) mécaniques de support et de guidage, caractérisé en ce que les positions extrêmes du meuble sont d'une part situées au voisinage de la cloison (3) et, d'autre part, décalées l'une par rapport à l'autre le long de celles-ci.

2. Agencement selon la revendication 1, caractérisé en ce que les moyens (5) mécaniques de support et de guidage comprennent au moins une bielle (19, 20) de liaison articulée d'une part à la cloison (3), directement ou non, et, d'autre part, au meuble (1).

3. Agencement selon l'une quelconque des revendications 1 et 2, caractérisé en ce qu'il comporte également des moyens mécaniques aptes à assurer une position relative constante du meuble (1) par rapport à une direction de référence.

4. Agencement selon la revendication 3, caractérisé en ce que la direction de référence est othogonale à la direction d'articulation de la bielle (19, 20) des moyens (5) à la cloison (3) et au meuble (1).

5. Agencement selon l'une quelconque des revendications 3, 4, caractérisé en ce que les moyens mécaniques aptes à assurer une position relative constante du meuble (1) par rapport à une direction de référence font partie des moyens (5) mécaniques de support et de guidage comprenant, à cet effet, au moins deux bielles (19, 20) de liaison articulées d'une part à la cloison (3), d'autre part au meuble (1) en constituant un parallélogramme déformable (21, 22, 23, 24).

6. Agencement selon la revendication 5, caractérisé en ce qu'il comprend comme faisant partie des moyens (5) deux paires de bielles (19, 20) écartées transversalement l'une de l'autre le long de leurs axes d'articulation commun (21, 22, 23, 24).

7. Agencement selon l'une quelconque des revendications 1 à 6, caractérisé en ce qu'il comprend, en outre, des moyens (11) manuels de préhension permettant d'appliquer la force d'entraînement pour le déplacement du meuble (1).

8. Agencement selon l'une quelconque des revendications 1 à 7, caractérisé en ce que les moyens manuels de préhension (11) comprennent une poignée (12) associée à une bielle (19, 20) de liaison des moyens (5).

9. Agencement selon l'une quelconque des revendications 1 à 8, caractérisé en ce que la poignée (12) fait partie d'un cadre (13) en U reliant les deux paires de bielles (19, 20) des moyens (5).

10. Agencement selon l'une quelconque des revendications 1 à 9, caractérisé en ce que les moyens manuels de préhension sont agencés pour former levier.

11. Agencement selon l'une quelconque des revendications 1 à 10, caractérisé en ce que les axes d'articulation des bielles (19, 20) des moyens (5) sont au moins sensiblement horizontaux et la direction de référence au moins sensiblement verticale.

12. Agencement selon la revendication 11, caractérisé en ce que la cloison (3) sépare deux zones d'appui au moins sensiblement horizontales et à des niveaux différents, l'une (14) haute et l'autre (15) basse, les positions extrêmes du meuble (1) étant respectivement haute et basse du côté des zones d'appui haute (14) et basse (15), les écartements verticaux H entre les deux zones d'appui (14, 15) et les deux positions extrêmes du meuble (1) étant sensiblement égaux ou voisins.

13. Agencement selon l'une quelconque des revendications 1 à 10 et 11, caractérisé en ce que la cloison (3) fait partie d'un véhicule ou habitacle (2) tel qu'une caravane pourvu également d'un plancher formant zone d'appui intérieure haute (14) supporté par des roues ou supports (16) reposant au sol formant zone d'appui extérieure basse (15), l'écartement H entre les deux positions extrêmes du meuble (1) dans la direction verticale étant sensiblement égal à ou voisin de la hauteur H du plancher (14) par rapport au sol (15), ce qui a pour effet que le meuble (1) se trouve à la même hauteur relative pour un utilisateur dans ses deux positions extrêmes.

14. Véhicule, notamment servant d'habitacle, tel que caravane, camping-car, maison mobile, camion ou remorque magasin ou équivalent, fixe ou mobile, comprenant un plancher (14) surélevé par rapport au sol (15) et soutenu par des supports (16) tels que roues, béquilles ou équivalents, ainsi que des cloisons définissant l'habitacle, pourvu d'un aménagement mobilier fonctionnel comprenant généralement une pluralité de meubles dont au moins (1), ou partie d'un se trouvant dans l'une des deux positions extrêmes, dont une position intérieure haute d'utilisation proche d'une cloison (3) essentiellement verticale, et pouvant être déplacé de l'une à l'autre de ces deux positions extrêmes en restant constamment au moins sensiblement en position relative horizontale, au moyen d'une force d'entraînement appliquée provoquant son déplacement et des moyens (5) mécaniques de support et de guidage, caractérisé en ce que les deux positions extrêmes du meuble (1) sont la position intérieure haute d'utilisation et une position extérieure basse également d'utilisation laquelle dernière position est proche de la cloison (3) et de l'autre côté de celle-ci que la position intérieure haute, les deux positions étant décalées l'une par rapport à l'autre dans la direction verticale avec un écartement H sensiblement égal à ou voisin de la hauteur H du plancher (14) par rapport au sol (15) ; la cloison (3) comportant une ouverture (4) de passage du meuble (1) de l'une à l'autre de ses positions extrêmes ; ce qui a pour effet que le meuble (1) peut être utilisé depuis l'intérieur ou l'extérieur du véhicule (2), selon qu'il est en position intérieure haute ou en position extérieure basse, respectivement, tout en étant, pour l'utilisateur à une hauteur relative d'utilisation sensiblement égale dans les deux cas.

15. Véhicule selon la revendication 14, caractérisé en ce que le meuble (1) est un bloc cuisine ou partie de bloc-cuisine.

16. Véhicule selon l'une quelconque des revendications 14 et 15, caractérisé en ce que les moyens (5) mécaniques de support et de guidage comprennent au moins une bielle (19, 20) de liaison articulée d'une part à un soubassement (17) fixé à la cloison (3) et, d'autre part, au meuble (1), autour d'axes au moins sensiblement horizontaux.

17. Véhicule selon l'une quelconque des revendications 14 à 16, caractérisé en ce que les moyens (5) mécaniques de support et de guidage comprennent au moins deux bielles (19, 20) de liaison constituant un parallélogramme déformable (21, 22, 23, 24).

18. Véhicule selon l'une quelconque des revendications 14 à 17, caractérisé en ce que les moyens (5) mécaniques de support et de guidage comprennent au moins une paire de bielles de liaison écartées transversalement l'une de l'autre le long de leurs axes d'articulation commun.

19. Véhicule selon l'une quelconque des revendications 14 à 18, caractérisé en ce qu'aux moyens (5) mécaniques de support et de guidage sont associés des moyens (11) manuels de préhension permettant d'appliquer la force d'entraînement pour le déplacement du meuble (1) constitués par une poignée (12) formant l'âme d'un cadre (13) en U dont les deux branches (18) sont fixées rigidement à deux bielles des moyens (5).

20. Véhicule selon l'une quelconque des revendications 14 à 19, caractérisé en ce que les moyens mécaniques de support et de guidage et les moyens manuels de préhension comprennent deux bielles avant (19) écartées transversalement l'une de l'autre et deux bielles arrière (20) écartées transversalement l'une de l'autre, articulées au soubassement (17) autour d'axes inférieurs avant (21) et arrière (22) respectivement et au meuble (1) autour d'axes supérieurs avant (23) et arrière (24), les axes (22, 21, 23, 24) constituant un parallélogramme déformable ; l'axe inférieur avant (21) étant placé à un niveau plus élevé que l'axe inférieur arrière (22) ; l'axe inférieur arrière (22) étant situé à proximité immédiate de la cloison (3) ; les bielles (19, 20) étant inclinées à environ 45° dans les positions extrêmes du meuble (1) ; le cadre en U (13) étant fixé par ses branches (18) aux bielles arrière (20), sensiblement perpendiculairement à celles-ci et sensiblement au milieu (25) de celles-ci ; la poignée (12) formant âme du cadre (13) en U étant, en position intérieure haute du meuble (1) située au voisinage de la cloison (3), derrière et à proximité du meuble (1), au moins sensiblement au même niveau que l'axe supérieur arrière (24) et, en position extérieure basse du meuble (1) située au voisinage de la cloison (3), en dessous et à proximité du meuble (1).

21. Véhicule selon l'une quelconque des revendications 14 à 20, caractérisé en ce que le meuble (1) formant bloc-cuisine de forme générale parallélépipédique et relativement plate comporte un plan supérieur (26) et rigidement fixées et dirigées vers le bas deux joues (27) latérales verticales transversales auxquelles sont associées les bielles (19, 20) des moyens (5) mécaniques de support et de guidage, le bloc-cuisine (1) reposant sur le soubassement (17), en position intérieure haute, par ses joues (27).

22. Véhicule selon la revendication 21, caractérisé en ce que le bloc-cuisine (1) comporte, incorporé dans le plan supérieur (26) de l'équipement de cuisine tel qu'un évier, une ou des plaques de cuisson.

23. Véhicule selon la revendication 22, caractérisé en ce que les manettes, boutons de commandes de la ou des plaques de cuisson sont situés sur le plan supérieur (26) ce qui a pour effet d'être accessibles dans l'une comme dans l'autre des deux positions extrêmes du meuble (1).

24. Véhicule selon l'une quelconque des revendications 22, 23, caractérisé en ce que les canalisations fluidiques de l'équipement de cuisine tels que celles pour l'eau, le gaz, l'électricité sont soit établies en permanence et comportent des éléments déformables, soit agencées de façon amovible.

25. Véhicule selon l'une quelconque des revendications 14 à 24, caractérisé en ce que le plan supérieur (26) vient sensiblement contre la cloison (3) les positions intérieure haute et extérieure basse, respectivement sur ses faces interne (8) et externe (9).

26. Véhicule selon l'une quelconque des revendications 14 à 25, caractérisé en ce que le soubassement (17) se présente sous la forme générale d'un caisson de forme générale parallélépipédique placé contre la cloison (3) et sur le plancher (14), limité par deux parois latérales (28) verticales, transversales, coplanaires aux joues (27) et auxquelles sont associées les bielles (19, 20) des moyens (5) mécaniques de support et de guidage.

27. Véhicule selon l'une quelconque des revendications 14 à 26, caractérisé en ce qu'en position extérieure basse, le meuble (1) repose en appui contre la cloison (3) ou pour une trappe 36 par ses chants frontaux (31).

28. Véhicule selon la revendication 27, caractérisé en ce qu'en position extérieure basse, les bielles arrière (20) sont en appui sur les bielles avant (19).

29. Véhicule selon l'une quelconque des revendications 27, 28, caractérisé en ce qu'en position extérieure basse, la poignée (12) formant âme du cadre (13) en U est portée par un support fixé à la cloison (3).

30. Véhicule selon la revendication 29, caractérisé en ce que le support de la poignée (12) en position extérieure basse comporte un dispositif de verrouillage.

31. Véhicule selon l'une quelconque des revendications 14 à 30, caractérisé en ce que l'ouverture (4) de la cloison (3) est soit permanente, soit temporaire susceptible d'être obturée par au moins une trappe mobile.

32. Véhicule selon la revendication 31, caractérisé en ce qu'il comporte deux trappes respectivement haute (35) et basse (36), indépendantes l'une de l'autre coplanaires en position de fermeture.

33. Véhicule selon l'une quelconque des revendications 31, 32, caractérisé en ce qu'une trappe haute (35) est montée articulée par son bord horizontal supérieur (37) à la cloison (3) notamment au bord (10a) de l'ouverture (4) ; est mobile dans l'espace extérieur (7) entre une position de fermeture où elle est verticale et dirigée vers le bas et une position d'ouverture où elle laisse libre l'ouverture (4) qu'elle est destinée à obturer.

34. Véhicule selon la revendications 33, caractérisé en ce qu'en position d'ouverture, la trappe haute (35) est placée sensiblement horizontalement dans l'espace extérieur (4),

faisant fonction d'auvent et est maintenue au moyen de béquilles ou équivalent (43).

35. Véhicule selon l'une quelconque des revendications 31, 32, caractérisé en ce qu'une trappe basse (36) est montée articulée par son bord horizontal inférieur (40) à la cloison (3) notamment au bord (10b) de l'ouverture (4), est mobile dans l'espace extérieure (7) entre une position de fermeture où elle est verticale et dirigée vers le haut et une position d'ouverture où elle est verticale et dirigée vers le bas.

36. Véhicule selon la revendication 35, caractérisé en ce qu'en position d'ouverture la trappe basse (36) est placée contre la face externe (9) de la cloison (3), interposée entre celle-ci et le meuble (1).

37. Véhicule selon l'une quelconque des revendications 24 à 36, caractérisé en ce que le bord inférieur (10b) de l'ouverture (4) est placé à un niveau inférieur et voisin du plan supérieur (26) du meuble (1) en position extérieure basse.

38. Véhicule selon l'une quelconque des revendications 24 à 37, caractérisé en ce que les trappe haute (35) et basse (36) ont des hauteurs respectives telles que en position de fermeture leurs bords libres contigus (38, 41) sont situés à proximité au dessus du plan supérieur (26) du meuble (1), en position basse, notamment au moins sensiblement coplanaire de la paroi horizontale supérieure (30) du soubassement (17), de manière que le meuble (1) étant en position extérieure basse la trappe haute (35) puisse être amenée en position de fermeture sans interférer avec le meuble (1) ou les bielles (19, 20) tout en fermant substantiellement l'ouverture (4) de la cloison (3).

EP 0 358 568 A1

FIG.1

# FIG.2

FIG.3

EP 0 358 568 A1

FIG. 4

## FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 008 978 (M. DUFRANCATEL)<br>* Figures 1-5; revendication 1 *<br>--- | 1,14 | B 60 P 3/36 |
| A | FR-A-2 351 626 (M. DUFRANCATEL)<br>* Figures 1-6; revendication 1 * &<br>US-A-4 150 861 (Cat. D)<br>--- | 1 | |
| A,D | FR-A-2 513 098 (DIGUE S.A.)<br>* Figures 1-3; revendication 1 *<br>--- | 1 | |
| A,D | US-A-3 406 999 (H.J. KOZICKI)<br>* Figures 1-3; colonne 2, ligne 29 - colonne 4, ligne 4 *<br>--- | 1 | |
| A,D | DE-U-8 104 005 (RUDOLF KAPFHAMMER GmbH)<br>* Figures; page 4, paragraphe 4 - page 5, paragraphe 1 *<br>----- | 1 | |

**DOMAINES TECHNIQUES RECHERCHES (Int. Cl.5)**

B 60 P
B 60 N
A 47 B

**Le présent rapport a été établi pour toutes les revendications**

| Lieu de la recherche | Date d'achèvement de la recherche | Examinateur |
|---|---|---|
| LA HAYE | 01-12-1989 | CHLOSTA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)